Europäisches Patentamt

European Patent Office

Office européen des brevets

(19)

(11) Numéro de publication : **0 367 695 B1**

(12) **FASCICULE DE BREVET EUROPEEN**

(45) Date de publication du fascicule du brevet :
**01.07.92 Bulletin 92/27**

(51) Int. Cl.$^5$ : **F23D 14/18,** F23D 14/28,
F24H 3/04, A45D 20/06,
// F23D14/78

(21) Numéro de dépôt : **89420422.1**

(22) Date de dépôt : **27.10.89**

(54) **Appareil générateur d'air chaud, comportant un brûleur catalytique.**

(30) Priorité : **28.10.88 FR 8815370**

(43) Date de publication de la demande :
**09.05.90 Bulletin 90/19**

(45) Mention de la délivrance du brevet :
**01.07.92 Bulletin 92/27**

(84) Etats contractants désignés :
**AT BE CH DE ES FR GB GR IT LI LU NL SE**

(56) Documents cités :
**DE-A- 3 614 059
GB-A- 2 167 546
US-A- 3 995 991
PATENT ABSTRACTS OF JAPAN, vol. 10. no.
100 (M-470)(2157), 16 avril 1986; JP-A-60 233
415
PATENT ABSTRACTS OF JAPAN, vol. 9, no.
164 (M-395)(1887), 10 juillet 1985; JP-A-60 36
813**

(73) Titulaire : **APPLICATION DES GAZ
173, rue de Bercy
F-75012 Paris (FR)**

(72) Inventeur : **Roldan, Antoine
9 Bis Allée Beauvisage
F-69780 Mions (FR)**
Inventeur : **Demillière-Vergnais, Daniel
32 Chemin du Belvédère Beau Site
F-69340 Francheville (FR)**

(74) Mandataire : **Guerre, Dominique et al
Cabinet Germain et Maureau Le
Britannia-Tour C 20 Boulevard Eugéne
Deruelle BP 3011
F-69392 Lyon Cédex 03 (FR)**

## Description

La présente invention concerne un appareil générateur d'air chaud, associant un brûleur à gaz du type catalytique et des moyens de ventilation. Un tel appareil peut recevoir application dans différents domaines techniques, par exemple à titre de sèche-cheveux portatif ou de pistolet à air chaud pour le décapage de peintures.

Selon le document DE-A-3614059, on a décrit un appareil du type précité, comprenant :

– un corps allongé formant conduit de circulation d'un flux d'air, allongé d'une entrée pour l'air frais à une sortie pour l'air chaud

– un moyen de ventilation, comprenant un moteur électrique et un ventilateur, disposés à l'intérieur du corps, pour générer le flux d'air de l'entrée vers la sortie du conduit

– un brûleur catalytique à gaz, disposé entièrement à l'intérieur du conduit de circulation, communiquant d'un côté avec une source du gaz combustible, en l'occurence un réservoir rechargeable disposé dans la poignée de l'appareil, et de l'autre côté avec la sortie du conduit, pour mélanger à cet endroit les fumées de combustion avec le flux d'air, et produire ainsi l'air chaud évacué.

Le brûleur catalytique dit à air induit comprend lui-même :

– un moyen d'admixtion d'air primaire et du gaz combustible, disposé entièrement à l'intérieur du conduit de circulation du flux d'air ; et ce moyen associe, d'une part un injecteur pour éjecter un jet du gaz combustible sous pression, et d'autre part un organe de prélèvement d'air primaire sur le flux d'air ventilé, constitué par un tube de mélange disposé dans le prolongement de l'injecteur, comportant au moins une perforation latérale, et par une virole extérieure au niveau de ladite perforation pour la déflexion et l'introduction d'une partie de l'air ventilé dans le tube de mélange

– une chambre de distribution du gaz combustible mélangé à l'air, en aval du moyen d'admixtion

– une structure catalytique consistant en un noyau réfractaire, traversé de sa face d'entrée à sa face de sortie par une pluralité de canaux parallèles, dont la surface interne est revêtue par un catalyseur de combustion ; la face d'entrée est en relation avec la chambre de distribution, et la face de sortie avec le conduit du flux d'air ventilé.

Le fonctionnement d'un appareil tel que décrit précédemment est le suivant :

– après ouverture du circuit de gaz combustible, une flamme nue transitoire d'allumage est allumée entre la chambre de distribution et la face d'entrée de la structure catalytique ; cette flamme échauffe progressivement le noyau réfractaire

– le moyen de ventilation étant sous la dépendance de la température du brûleur catalytique, grâce à une sonde de température appropriée, le ventilateur est automatiquement mis en marche, dès que la structure catalytique atteint une température prédéterminée ; dès cet instant, l'air primaire est introduit dans le brûleur, sous convection forcée, grâce à la virole extérieure de déflexion, ce qui conduit à l'extinction de la flamme transitoire d'allumage

– puis le mélange gaz combustible-air primaire passe au travers de la structure catalytique, ayant atteint sa température de régime de combustion catalytique, moyennant quoi la combustion se poursuit en mode catalytique, et les fumées de combustion se mélangent à la sortie du brûleur à l'air frais pulsé, pour produire l'air chaud évacué par la sortie du conduit.

Selon la description précédente, le fonctionnement dsu brûleur catalytique conforme à DE-A-3614059 est totalement dépendant du flux d'air pulsé ; et cette dépendance fait d'ailleurs partie de la solution de combustion catalytique retenue selon ce document, puisque, d'une part l'air pulsé sert à éteindre la flamme nue temporaire d'allumage du brûleur catalytique, et d'autre part pour les faibles puissances thermiques il est même envisagé de faire passer tout l'air pulsé ou ventilé au travers du brûleur.

Il faut d'ailleurs observer que cette dépendance du brûleur catalytique par rapport à l'air ventilé est la solution venant immédiatement à l'esprit de l'homme de métier compétent, dans la mesure où les brûleurs catalytiques à air induit sont connus pour leur grande sensibilité à l'oxygénation du mélange à brûler, et où en conséquence l'utilisation à cette fin de l'air ventilé apparaît a priori comme très favorable.

Conformément à l'invention, à l'opposé de l'enseignement de DE-A-3614059, on a découvert qu'une telle dépendance apportait beaucoup plus d'inconvénients importants que d'avantages.

Tout d'abord, la dépendance du régime de combustion catalytique par rapport au flux d'air ventilé peut conduire à passer en-dessous de la stoechiométrie, c'est à dire à enrichir le mélange en gaz combustible, notamment dans les circonstances suivantes :

– l'appareil est approché trop près d'une surface à traiter, et alors le débit du flux d'air pulsé se trouve temporairement diminué, parfois dans des proportions importantes

– en fin de décharge des accus d'alimentation du moteur électrique d'entraînement du ventilateur, le flux d'air pulsé devient trop faible par rapport à la stoechiométrie recherchée.

Dans ces circonstances, la combustion catalytique ne suffit plus pour brûler complètement le gaz combustible. La céramique réfractaire étant encore suffisamment chaude ou incandescente, une flamme nue peut s'allumer sur la face de sortie du brûleur catalytique, en face de la sortie du conduit de circulation. Une telle flamme, même limitée, peut être inacceptable en termes de sécurité d'utilisation de l'appareil.

Enfin, tout appareil à air chaud pulsé comporte en général plusieurs régimes différents de fonctionnement, par exemple l'un à faible débit et l'autre à fort débit, choisis par l'utilisateur. Il est évident qu'un tel changement de régime est incompatible avec un fonctionnement à puissance relativement constante du brûleur catalytique, sauf à moduler cette puissance selon le régime choisi par l'utilisateur, par exemple avec des moyens plus ou moins compliqués de contrôle correspondant du débit de gaz combustible.

La présente invention a pour objet de remédier aux inconvénients décrits précédemment.

Plus précisément, la présente invention a pour objet une solution technique permettant de contrôler et maitriser l'aération du brûleur catalytique à air induit.

Selon la présente invention, à l'encontre de la direction technique montrée par le document DE-A-3614059, qui est d'ailleurs comme dit plus haut celle la plus immédiate au technicien compétent, on a trouvé que cette maîtrise du régime catalytique de combustion pouvait être obtenue en agençant l'organe de prélèvement d'air primaire pour prélever ce dernier à l'extérieur du conduit de circulation d'air ventilé, indépendamment et séparément par rapport au flux d'air circulant dans ledit conduit.

Outre la résolution des inconvénients précités, la solution selon l'invention permet un fonctionnement du brûleur catalytique indépendant du ventilateur. Une telle indépendance apporte notamment les avantages déterminants suivants.

Le brûleur catalytique peut être conçu et dimensionné, uniquement en fonction de la puissance calorifique à apporter. Et en fonctionnement, la puissance nominale sera obtenue, quelles que soients les circonstances ou régimes d'utilisation de l'appareil.

Le brûleur catalytique peut être conçu et dimensionné, indépendamment du reste de l'appareil, et selon ses propres contraintes. En particulier, le brûleur peut être dimensionné en légère sur-aération, de manière à abaisser la température de fonctionnement du brûleur, ce qui, outre les questions de sécurité d'utilisation, favorise la tenue au vieillissement de la structure catalytique.

En correspondance avec cette sur-aération, le débit d'air primaire indépendant de l'air ventilé peut être régulé en fonction de la température du brûleur, par exemple à une valeur faible, voire nulle, au démarrage du brûleur, puis à une valeur importante en fonctionnement, par des mécanismes connus en soi, dits "starter", et consistant par exemple en un bilame d'obturation.

Une telle suroxygénation avec starter ne pouvait être envisagée selon DE-A-3614059.

L'allumage du brûleur catalytique devient un processus autonome, ne pouvant être contrarié d'une quelconque manière par le flux d'air ventilé.

Différents documents antérieurs, et notamment US-C-3995991 pour un générateur d'air chaud portatif, et JP-C-69/717 pour un sèche-cheveux, ont proposé de disposer un brûleur à gaz à flamme nue, pour l'essentiel à l'extérieur du conduit de circulation du flux d'air ventilé. Le choix d'une telle disposition n'implique pas la reconnaissance ou l'identification de l'indépendance de l'air primaire par rapport à l'air ventilé, comme facteur déterminant une bonne combustion nécessaire à la production d'air chaud. Comme le brûleur est situé pour l'essentiel à l'extérieur du conduit d'air ventilé, il n'existe aucun agencement particulier du moyen d'admixtion d'air primaire et/ou de l'organe de prélèvement d'air primaire. Et pour terminer, un brûleur à flamme nue est autre chose qu'un brûleur à combustion catalytique, notamment à air induit, de telle sorte que les moyens prévus pour l'un ne peuvent être extrapolés à l'autre, et inversement, en particulier si le brûleur catalytique se trouve pour l'essentiel contenu par le conduit de circulation de l'air ventilé, comme c'est le cas selon la présente invention.

La présente invention est maintenant décrite par référence aux dessins annexés, dans lesquels :

– la figure 1 représente une vue en coupe, de manière schématique, d'un appareil générateur d'air chaud conforme à la présente invention ;

– la figure 2 représente une vue en coupe longitudinale selon la ligne II.II de la figure 3, du brûleur catalytique faisant partie de l'appareil selon la figure 1 ;

– la figure 3 représente une vue en coupe transversale, selon la ligne III.III de la figure 2, du même brûleur catalytique ;

– la figure 4 représente une vue agrandie, avec arrachement partiel, du moyen d'admixtion d'air primaire selon l'invention, et faisant partie de l'appareil représenté à la figure 1 ;

– la figure 5 représente une vue en coupe, de manière schématique, d'un autre mode d'exécution de la présente invention ;

– la figure 6 représente une vue en coupe, de manière schématique, d'un autre mode d'exécution de la présente invention ;

– la figure 7 représente une vue en coupe axiale et verticale d'un autre brûleur catalytique, pouvant être utilisé conformément à l'invention.

La présente invention est décrite par référence à un sèche-cheveux, du type portatif, à usage domestique.

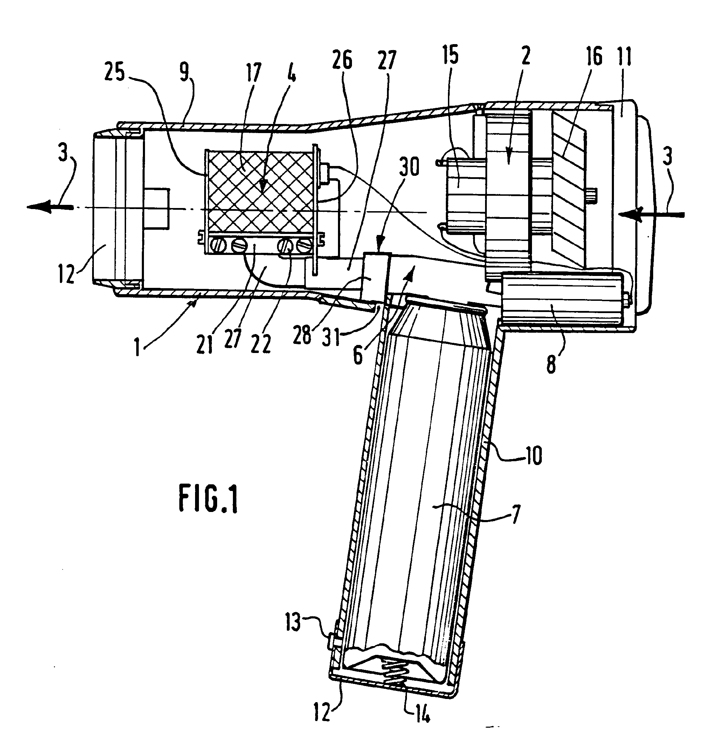

L'appareil selon les figures 1 à 4 comporte :

– un corps (1) formant enveloppe extérieure de l'appareil, et présentant de manière générale la forme d'un pistolet ;

– des moyens de ventilation (2) disposés à l'intérieur du corps (1), permettant de générer un flux d'air, circulant dans l'appareil selon les flèches repérées par la référence numérique (3) ;

– un brûleur à gaz (4), du type catalytique, disposé à l'intérieur du corps (1), dont les fumées de combustion se mélangent à l'air frais introduit grâce au moyen de ventilation, pour produire l'air chaud évacué de l'appareil ;

– un bloc métallique (6) monté à l'intérieur du corps (1), assurant un passage du gaz combustible sous pression, d'une cartouche interchangeable (7) vers le brûleur (4) ;

– une source (8) d'alimentation électrique, par exemple une simple pile ou un accumulateur rechargeable, disposé à l'intérieur du corps (1), assurant l'alimentation électrique des différents organes de l'appareil requérant une telle source d'énergie.

Par conséquent, l'autonomie d'un appareil selon l'invention, et en particulier son indépendance par rapport à tout branchement, résultent de l'incorporation de la cartouche (7) de gaz combustible d'une part, et de la source électrique (8) d'autre part.

Le corps (1) réalisé en matière plastique par exemple, comporte deux parties disposées sensiblement à angle droit, à savoir une première partie (9) formant conduit de circulation du flux d'air, de l'arrière à l'avant de l'appareil, la partie arrière dudit conduit ayant une section plus large que celle de la partie avant, et une deuxième partie (10) ayant la forme d'un tube, servant à la fois à la réception de la cartouche de gaz combustible (7) et à la préhension de l'appareil par la main de l'utilisateur. Une grille de protection (11) est disposée à l'arrière du conduit (9), tandis qu'un diffuseur (12) est disposé à l'avant du même conduit.

La partie inférieure du tube (10) est associée à un couvercle (12), pouvant être solidarisé de manière réversible par un mécanisme à baïonnette (13). Ce couvercle (12) comporte un ressort (14) permettant d'appuyer la cartouche (7) contre le bloc métallique (6). La cartouche (7) interchangeable, c'est-à-dire pouvant être remplacée par une cartouche pleine lorsqu'elle est vide, renferme un gaz combustible sous pression, par exemple du butane ; il s'agit par exemple d'une cartouche du type aérosol, telle que décrite dans le brevet français FR-A-2 580 376 au nom de la Demanderesse.

Le bloc métallique (6) fixé à l'intérieur du conduit (9) par des moyens appropriés, comprend d'une part des moyens de connexion reversible (non représentés) avec la cartouche (7), permettant tout à la fois une liaison étanche avec la valve aérosol et son ouverture, et d'autre part, des moyens de contrôle non représentés, permettant d'ouvrir ou fermer la circulation de gaz combustible vers le brûleur catalytique (4), et/ou de régler le débit envoyé vers ce dernier.

A cette fin, comme représenté à la figure 4, le bloc (6) comprend des canaux de circulation (6a) de gaz sous pression.

Les moyens de ventilation (2) sont disposés à l'arrière du conduit (9), par tout moyen approprié, et comportent de manière classique un moteur électrique (15) entraînant une roue de ventilateur (16) en vis-à-vis de la grille de protection (11). Le moteur électrique (15) est alimenté par une source appropriée, sous la forme de l'accumulateur ou pile électrique (8), avec un moyen d'ouverture et fermeture du circuit d'alimentation électrique décrit ci-après.

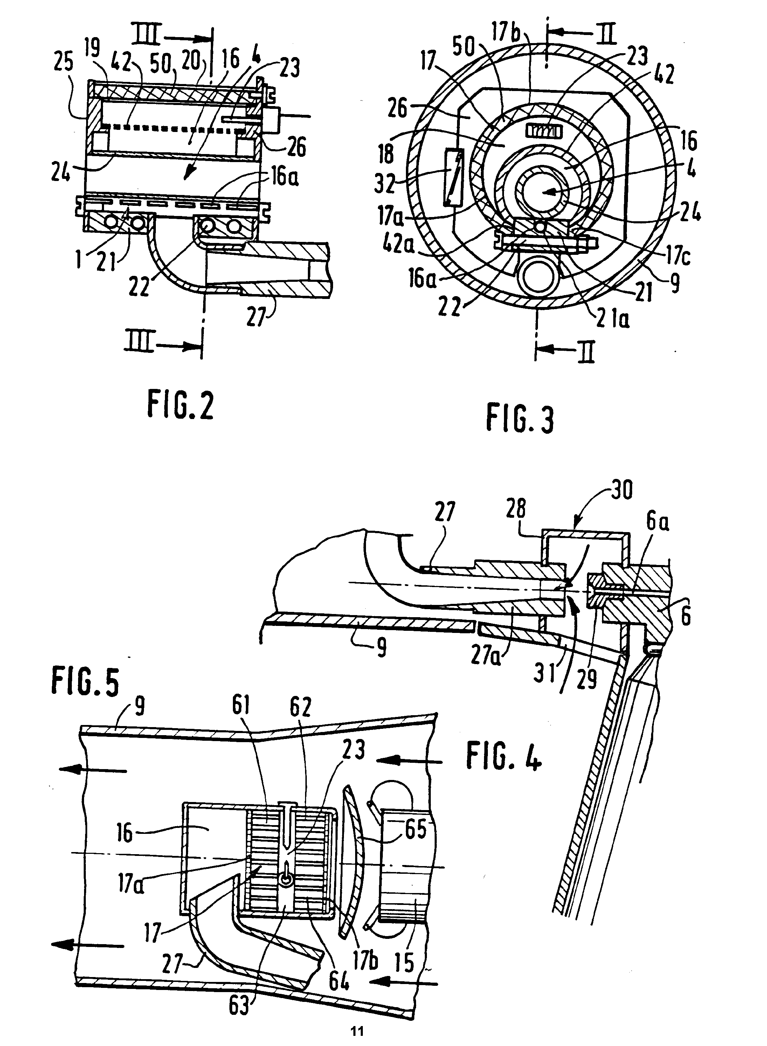

Plus particulièrement par référence aux figures 1 et 2, le brûleur catalytique (4) est du type à air induit, et comprend de manière générale :

– une chambre de distribution (116) du mélange de gaz combustible et de l'air primaire comburant, dont différentes entrées (16a) communiquent chacune, comme décrit ci-après, avec la source de gazcombustible sous pression, c'est-à-dire avec la valve aérosol de la cartouche (7) ;

– une structure catalytique (17), dont la face d'entrée (17a) est en relation avec la chambre de distribution précitée, dans le cas présent par l'intermédiaire d'une chambre d'allumage (18), et dont la face de sortie (17b) est en relation avec l'intérieur du conduit (9),c'est-à-dire avec le flux d'air circulant dans ce dernier.

Plus précisément, la structure catalytique (17) comprend, d'une part une nappe (50) d'un support perméable réfractaire, par exemple un non-tissé de fibres d'alumine, imprégné avec un catalyseur de combustion, et d'autre part deux treillis métalliques (19) et (20) à large maille, enserrant la nappe (50). Cette structure (17), ayant le mode de réalisation décrit précédemment, est disposée et conformée essentiellement selon un tube dont l'axe est identique ou parallèle à la direction du conduit (9). En fait, la structure catalytique (17) ne présente pas une forme complètement tubulaire, puisqu'il existe dans cette dernière une ouverture inférieure, généralement rectangulaire et étroite, délimitée par deux génératrices du tube en question. Cette ouverture est fermée par une plaque rectangulaire (21), de forme et dimensions correspondant à l'ouverture précitée, assurant comme décrit ci-après la distribution par le bas du mélange combustible. Cette plaque (21) allongée selon la direction du conduit est solidarisée avec la structure (17), grâce à deux rebords de cette dernière pressés contre deux bordures opposées de la plaque (21), selon les deux génératrices précitées par des tirants (22) passant au travers de ladite plaque, et disposés chacun perpendiculairement à la direction du conduit (9). Cette plaque (21) ou embase de distribution comporte un canal central et longitudinal (21a), permettant de répartir et distribuer le mélange combustible, communiquant d'un côté avec les moyens (30) d'admixtion de l'air primaire au gaz combustible, décrits ci-après, et de l'autre côté avec différentes fentes formant chacune entrée (16a) dans la chambre de distribution (16).

Le brûleur catalytique (4) comporte en outre une cloison interne (42) présentant essentiellement une forme tubulaire, disposée pour l'essentiel à distance de la structure catalytique (17), et divisant l'intérieur de cette dernière en deux chambres, à savoir d'une part la chambre d'allumage (18) comprise entre la cloison (42) et la structure catalytique (17), et d'autre part la chambre de distribution (16) limitée vers l'extérieur du brûleur par la cloison (42). Ces chambres (16) et (18) communiquent l'une avec l'autre, compte-tenu d'orifices appropriés prévus dans la cloison (42), ou de la perméabilité de cette dernière. La cloison interne tubulaire (42) présente à la manière de la structure (17), une ouverture (42a), en correspondance avec l'ouverture (17c), délimitée par deux génératrices, et fermée par la plaque de distribution (21). Pour ce faire, la cloison (42) présente également deux rebords extérieurs non représentés, serrés par les tirants (22) entre les rebords de la structure (17) et les deux bordures droites de la plaque (21). Une bougie d'allumage (23), se présentant par exemple sous la forme d'une résistance d'inflammation du mélange combustible, est disposée à l'intérieur de la chambre d'allumage (22).

Un tube interne (24) est disposé à l'intérieur et à distance de la structure catalytique (17), l'axe de ce tube étant identique ou parallèle à la direction du conduit (9). Ce tube (24) est supporté par deux plaques transversales (25) et (26), disposées respectivement sur la face aval et sur la face amont du brûleur catalytique (4), selon le sens de circulation des flèches (3), ces plaques s'étendant transversalement, c'est-à-dire perpendiculairement à la direction du conduit (9). Les plaques (25) et (26) comportent chacune un épaulement extérieur pour le support de la cloison (42), et un épaulement intérieur pour le support du tube (24). Comme le montre la figure (2), chacune de ces plaques, fixée sur l'embase (21) de distribution, s'étend radialement entre la structure catalytique (17) et le tube interne (24). Comme le montre la figure 3, la plaque (26) s'étend également à l'extérieur de la structure catalytique (17) pour former un flasque de déflection du flux d'air circulant dans le conduit (9), en amont du brûleur catalytique (4). En conséquence, la projection du contour extérieur du brûleur (4), c'est-à-dire de la structure (17), selon la direction du conduit (9), sur le flasque, est inscrite complètement à l'intérieur de ce dernier.

A partir de la description précédente, et par observation de la figure 3, on constate que l'intérieur de la structure catalytique (17) est divisé, de l'extérieur vers l'intérieur, en la chambre d'allumage (18), la chambre de distribution (16), et le conduit interne (24). Grâce à ce dernier, le flux d'air circulant dans le conduit (9), passe non seulement à l'extérieur du brûleur catalytique (17), mais également de ce dernier, de sa face amont vers sa face aval. Cette circulation d'air à l'intérieur du brûleur catalytique (4), permet de refroidir efficacement ce dernier, compte-tenu des températures de fonctionnement relativement élevées et caractérisant toute combustion catalytique à air induit.

Par référence aux figures 2 et 4, les moyens d'admixtion d'air primaire au gaz combustible, référencés de manière générale par une flèche (30), associés à l'organe (28) de prélèvement ou confinement d'air primaire, sont disposés en amont de la chambre de distribution (16), et communiquent plus particulièrement avec le canal de distribution (21a) de la plaque (21) par le conduit de liaison (27). Conformément au premier mode d'exécution de l'invention selon les figures 1 à 4, le moyen d'admixtion (30) est situé en totalité à l'intérieur du conduit (9), et en conséquence l'organe (28) de prélèvement consiste en un capotage d'isolement par rapport au conduit (9), reliant de manière relativement étanche l'extrémité amont du conduit de liaison (27) et une extrémité du bloc métallique (6) comportant un injecteur (29). Le volume interne du capotage (28), assurant l'introduction d'air primaire, communique directement avec l'extérieur du conduit (9), par une ouie ou ouverture (31) d'extraction prévue dans ce dernier.

Les moyens d'admixtion (30) comprennent donc :
– l'injecteur (29) éjectant un jet gazeux du gaz combustible sous pression, à partir du courant circulant et contrôlé dans le bloc (6),
– l'extrémité amont (27a) du tube de liaison (27), ayant une forme interne divergente, à la manière d'un venturi, disposé à distance et dans l'axe d'éjection de l'injecteur (29) ;
– le capotage (28) délimitant l'espace d'introduction de l'air primaire vers l'extérieur du conduit de liaison (27), entre son extrémité amont (27a) et l'injecteur (29) ; ce capotage (28) isole l'ntérieur du conduit (9) par rapport à l'espace précité d'introduction d'air primaire, lequel communique avec l'extérieur du conduit (9), par l'ouverture (31) prévue dans le corps (1) ; le capotage (28) comporte donc deux perforations en vis-à-vis, permettant une liaison relativement étanche avec l'extrémité amont (27a) du tube (27) d'une part, et avec l'extrémité du corps (6) comportant l'injecteur (29) d'autre part.

Comme indiqué précédemment, cette solution permet d'introduire l'air primaire en provenance de l'extérieur du conduit (9), et sans relation ou dépendance par rapport aux flux d'air circulant dans ce dernier.

Par ailleurs, un élément thermo-sensible (32) est disposé sur le flasque (26), en relation d'échange thermique avec le brûleur catalytique (4). Cet élément commande le circuit d'alimentation électrique du moteur (15), ce circuit étant ouvert ou fermé à une température prédéterminée atteinte par l'élément thermo-sensible. De cette manière, le ventilateur (13) se met en fonctionnement, lorsque le brûleur catalytique a atteint la température prédéterminée, ce qui permet à ce dernier de monter plus vite en température, lors du démarrage de l'appareil. Lorsque le brûleur catalytique est arrêté, le ventilateur permet un refroidissement rapide de ce dernier, avant que l'utilisateur ne cesse d'employer son appareil.

Conformément à la figure 5, la structure catalytique (17) consiste en deux noyaux identiques (61) et (62), réfractaires et perméables, séparés l'un de l'autre par un interstice d'allumage (63). Dans l'interstice d'allumage (63) est disposé le moyen électrique d'allumage (23), consistant dans le cas présent en deux électrodes en vis-à-vis. Chaque noyau réfractaire (61) ou (62) est traversé de sa face d'entrée à sa face de sortie, selon le sens de circulation du mélange à brûler, par une pluralité de canaux (64) parallèles, allongés chacun selon la direction du conduit de circulation (9), et dont la surface interne est revêtue par un catalyseur de combustion. Ces catalyseurs sont bien connus dans la technique, sous le nom de structure "nid d'abeille".

Selon ce mode d'exécution, la circulation du mélange à brûler (gaz combustible plus air primaire) s'effectue successivement au travers du premier noyau (61) puis du second noyau (62), la face d'entrée du premier constituant la face d'entrée (17a) de la structure catalytique, et la face de sortie du second noyau constituant la face de sortie (17b) de la même structure.

Selon la figure 5, on peut en outre noter les particularités suivantes :

– la face d'entrée (17a) de la structure catalytique est disposée en vis-à-vis de la sortie (12) du conduit (9), moyennant quoi la chambre de distribution (16) est située à l'arrière du brûleur catalytique, selon le sens du flux gazeux dans le conduit (9) ;

– un réflecteur (65) est disposé en vis-à-vis de la face de sortie (17b) de la structure catalytique, de manière à protéger thermiquement le moteur (15).

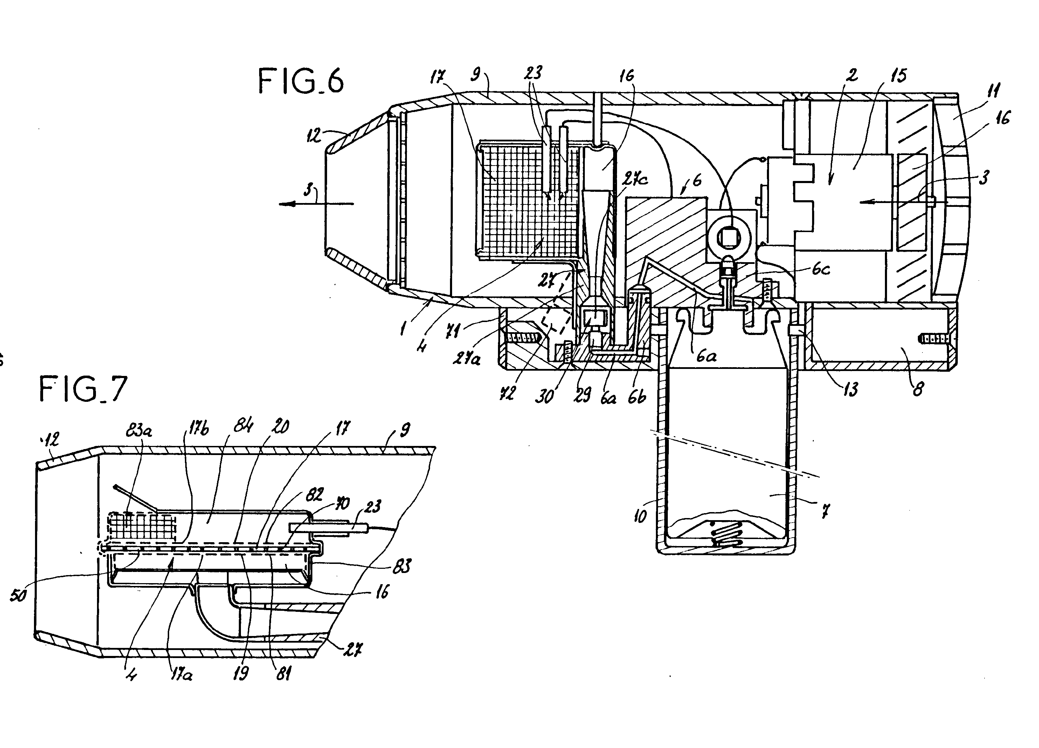

Le mode d'exécution conforme à la figure 6 diffère de celui décrit par référence aux figures 1 à 4, par les points suivants.

La structure catalytique (17) est du type de celle décrite par référence à la figure 5, et comporte en conséquence deux noyaux réfractaires, perméables, non représentés, séparés par un interstice d'allumage.

Le conduit de liaison (27) entre la chambre de distribution (16) et l'injecteur (29) est disposé transversalement par rapport au conduit (9), parallèlement à la cartouche (7). Le moyen d'admixtion (30), comprenant l'injecteur (29), ainsi que l'extrémité amont (27a) du tube (27) en forme de venturi, est situé à l'extérieur du conduit (9). A cette fin, le bloc métallique (6) est divisé en deux parties, (6c) située à l'intérieur du conduit (9), et (6b) située à l'extérieur du conduit (9), comprenant l'injecteur (29), et protégée par un capotage plastique (71) laissant passer l'air ambiant.

Un mécanisme dit "starter" (72), consistant en un bilame sensible à la température, est susceptible de se déplacer à l'intérieur du carénage plastique (71), pour obturer l'ouverture (27c) d'arrivée d'air primaire prévue sur l'extrémité (27a) du tube (27), à froid, et libérer la même ouverture, à chaud. Un tel mécanisme permet donc de moduler le débit d'air primaire, selon la température de fonctionnement, et notamment d'enrichir en gaz combustible le mélange à brûler, au moment de l'allumage.

Le brûleur catalytique (4) représenté à la figure (7) diffère de celui représenté aux figures 2 et 3 par les points suivants.

La structure catalytique (17) comprend une nappe (50) constituée par un enchevêtrement homogène de fibres céramiques, présentant la cohésion et la souplesse d'un papier, et traversée de sa face d'entrée (17a) à sa face de sortie (17b) par une pluralité de perforations (70) distribuées selon la surface de la nappe. Une telle structure a été décrite dans la demande de brevet français N° 89 10 795 du 7 Août 1989, dont le contenu est incorporé à la présente description, en tant que de besoin. Les faces d'entrée et de sortie (17a) et (17b) sont protégées par des grillages métalliques réfractaires de maintien (81) et (82) respectivement.

Cette structure catalytique est disposée à plat et dans un plan médian d'un boîtier rectangulaire (83), parallèlement à la direction du conduit (9), en délimitant de part et d'autre, la chambre de distribution (16) et une chambre d'allumage (84). Le boîtier (83) présente une ouverture (83a), protégée par un grillage anti-flamme, dirigée vers la sortie (12) du conduit (9), et en relation uniquement avec la chambre aval (84) du brûleur. Par cette ouverture (83a), les gaz de combustion s'échappent et se mélangent au flux d'air ventilé.

## Revendications

1. Appareil générateur d'air chaud, comprenant :
– un corps (1) formant conduit (9) de circulation d'un flux d'air, allongé d'une entrée (11) pour l'air frais à une sortie (12) pour l'air chaud
– un moyen (2) de ventilation disposé à l'intérieur du corps, pour générer le flux d'air de l'entrée vers la sortie dudit conduit
– un brûleur (4) catalytique à gaz, disposé pour l'essentiel à l'intérieur du conduit, communiquant avec une source (7) du gaz combustible sous pression, et dont les fumées de combustion se mélangent au flux d'air pour produire l'air chaud évacué, ledit brûleur à air induit comprenant un moyen (30) d'admixtion d'air primaire et du gaz combustible, disposé pour l'essentiel à l'intérieur du conduit de circulation, avec un organe (28) de prélèvement d'air primaire, une chambre de distribution (16) du gaz combustible mélangé à l'air, en aval du moyen d'admixtion, et une structure catalytique (17) dont la face d'entrée (17a) est en relation avec la chambre de distribution, et dont la face de sortie (17b) est en relation avec le conduit du flux d'air, caractérisé en ce que l'organe de prélèvement d'air primaire est agencé pour prélever ce dernier à l'extérieur du conduit (9), indépendamment et séparément par rapport au flux d'air circulant dans ledit conduit.

2. Appareil selon la revendication 1, caractérisé en ce que le moyen d'admixtion (30) d'air primaire et du gaz combustible est situé à l'intérieur du conduit (9), et ledit organe comprend un capotage (28) d'isolement par rapport audit conduit, dont le volume interne d'introduction d'air primaire communique directement avec l'extérieur dudit conduit, notamment par une ouïe d'extraction (31) prévue dans ce dernier.

3. Appareil selon la revendication 1, caractérisé en ce que seul le moyen (30) d'admixtion d'air primaire et du gaz combustible est situé à l'extérieur du conduit (9), et est éventuellement disposé dans un carénage de protection perméable à l'air ambiant.

4. Appareil selon la revendication 1, caractérisé en ce que la structure catalytique (17) comprend une nappe (50) d'un support perméable réfractaire, imprégné avec un catalyseur de combustion, et cette structure est disposée et conformée essentiellement selon un tube dont l'axe est identique ou parallèle à la direction du conduit de circulation du flux d'air (9), la chambre de distribution (16) étant comprise à l'intérieur dudit tube.

5. Appareil selon la revendication 4, caractérisé en ce qu'un flasque (26) de déflexion du flux d'air est disposé dans le conduit (9), en amont du brûleur catalytique (4), transversalement par rapport à la direction dudit conduit, la projection du contour extérieur dudit brûleur (4), selon ladite direction, sur ledit flasque étant inscrite complètement à l'intérieur du contour de ce dernier.

6. Appareil selon la revendication 3, caracterisé en ce que le brûleur catalytique comporte un tube interne (24), disposé pour l'essentiel à distance de la structure catalytique (17), dont l'axe est identique ou parallèle à la direction du conduit (9) de circulation du flux d'air, les faces amont et aval du brûleur étant fermées par une plaque (25, 26) transversale s'étendant entre la structure catalytique tubulaire (17) et le tube interne (24).

7. Appareil selon la revendication 1, caractérisé en ce que la structure catalytique comporte au moins deux noyaux (61, 62) réfractaires, séparés l'un de l'autre par un interstice (63) d'allumage, chaque noyau étant traversé de sa face d'entrée à sa face de sortie par une pluralité de canaux (64), parallèles, dont la surface interne est revêtue par un catalyseur de combustion.

8. Appareil selon la revendication 7, caractérisé en ce que la structure catalytique est agencée de telle manière que la circulation du gaz combustible mélangé à l'air primaire s'effectue successivement au travers d'un noyau (61) puis de l'autre (62), la face d'entrée du premier noyau constituant la face d'entrée de la structure catalytique, et la face de sortie du second noyau constituant la face de sortie de la structure catalytique.

9. Appareil selon la revendication 1, caractérisé en ce que la structure catalytique (17) comprend une nappe (50) constituée par un enchevêtrement homogène de fibres céramiques, présentant la cohésion et la souplesse d'un papier, et traversée de la face d'entrée (17a) à la face de sortie (17b) par une pluralité de perforations (70) distribuées selon la surface de la nappe.

10. Appareil selon la revendication 1, caractérisé en ce que la structure catalytique (17) comprend une nappe (50) d'un support perméable réfractaire, imprégné avec un catalyseur de combustion, et cette structure est disposée à plat, parallèlement à la direction du conduit de circulation du flux d'air (9).

## Patentansprüche

1. Heißlufterzeugungsvorrichtung, mit:
– Einem Gehäuse (1), das einen zwischen einem Eintritt (11) für frische Luft und einem Austritt (12) für heiße Luft langgestreckten Strömungskanal (9) für einen Luftstrom formt
– in dem Inneren des Gehäuses angeordneten Gebläsemittel (2) zum Erzeugen des Luftstromes von dem Eintritt zu dem Austritt des Kanales
– einem im wesentlichen in dem Inneren des Kanales angeordneten katalytischen Gasbrenner (4), der mit einer quelle (7) von unter Druck stehendem Brenngas in Verbindung steht und dessen Verbrennungsgase sich mit dem Luftstrom vermischen, um die ausgestoßene heiße Luft zu erzeugen, wobei dieser Brenner mit zugeführter Luft eine im wesentlichen in dem Inneren. des Strömungskanales angeordnete Vermischungseinrichtung (30) für Primärluft und Brenngas, mit einem Abnahmeorgan (28) für Primärluft, stromabwärts von der Vermischungseinrichtung eine Verteilungskammer (16) für mit Luft vermischtes Brenngas, und eine katalytische Struktur (17) umfaßt, dessen Eintrittsseite (17a) mit der Verteilungskammer in Verbindung ist und dessen Austrittsseite (17b) mit dem Kanal für den Luftstrom in Verbindung ist, dadurch gekennzeichnet, daß das Abnahmeorgan für Primärluft dazu eingerichtet ist, die letztere von außerhalb des Kanales (9) unabhängig und getrennt von dem in dem Kanal fließenden Luftstrom abzunehmen.

2. Vorrichtung nach Anspruch 1, dadurch gekennzeichnet, daß die Vermischungseinrichtung (30) für Primärluft und Brenngas in dem Inneren des Kanales (9) angeordnet ist, und daß das Organ eine Abdeckung (28) zur Isolierung gegenüber dem Kanal umfaßt, deren Innenraum für Primärluftzufuhr unmittelbar mit der äußeren Umgebung des Kanales in Verbindung steht, und zwar über eine in dem letzteren vorgesehene Absaugöffnung (31).

3. Vorrichtung nach Anspruch 1, dadurch gekennzeichnet, daß einzig die Vermischungseinrichtung (30) für Primärluft und Brenngas außerhalb des Kanales (9) gelegen und unter Umständen in einer für Umgebungsluft durchlässigen Schutzverkleidung angeordnet ist.

4. Vorrichtung nach Anspruch 1, dadurch gekennzeichnet, daß die katalytische Struktur (17) eine Schale (50) aus einem mit einem Verbrennungskatalysator beschichteten, durchlässigen, hitzebeständigen Träger umfaßt, und daß diese Struktur im wesentlichen in Form einer Röhre angeordnet und ausgebildet ist, deren Achse identisch mit oder parallel zu der Richtung des Strömungskanales für den Luftstrom ist, wobei die Verteilungskammer (16) in dem Inneren dieser Röhre aufgenommen ist.

5. Vorrichtung nach Anspruch 4, dadurch gekennzeichnet, daß in dem Kanal (9) stromaufwärts von dem katalytischen Brenner (4) quer zu der Richtung des Kanales ein Abweiserflansch (26) für den Luftstrom angeordnet ist, wobei die Projektion der äußeren Kontur des Brenners (4) in der gennanten Richtung auf den genannten Flansch vollstandig innerhalb der Kontur des letzteren eingeschrieben ist.

6. Vorrichtung nach Anspruch 3, dadurch gekennzeichnet, daß der katalytische Brenner eine im wesentlichen im Abstand zu der katalytischen Struktur (17) angeordnete innere Röhre (24) umfaßt, deren Achse identisch mit oder parallel zu der Richtung des Strömungskanales (9) für den Luftstrom ist, wobei die stromaufwärts und stromabwärts gelegenen Seiten des Brenners je durch eine Querplatte (25, 26) abgeschlossen sind, die sich zwischen der röhrenförmigen katalytischen Struktur (17) und der inneren Röhre (24) erstreckt.

7. Vorrichtung nach Anspruch 1, dadurch gekennzeichnet, daß die katalytische Struktur wenigstens zwei voneinander durch einen Zündspalt (63) getrennte, hitzebeständige Kerne (61, 62) umfaßt, wobei jeder Kern von einer Eintrittsseite bis zu seiner Austrittsseite von einer Mehrzahl von parallelen Kanälen durchzogen ist, deren Innenflächen mit einem Verbrennungskatalysator beschichtet sind.

8. Vorrichtung nach Anspruch 7, dadurch gekennzeichnet, daß die katalytische Struktur derart eingerichtet ist, daß die Strömung des mit der Primärluft vermischten Brenngases nacheinander durch den einen gern (61) und dann durch den anderen Kern (62) hindurch verläuft, wobei die Eintrittsseite des ersten Kernes die Eintrittsseite der katalytischen Struktur und die Austrittsseite des zweiten Kernes die Austrittsseite der katalytischen Struktur bildet.

9. Vorrichtung nach Anspruch 1, dadurch gekennzeichnet, daß die katalytische Struktur (17) eine Schale umfaßt, die von einem homogenen Gewirr von Keramikfasern gebildet ist, welches die Bindekraft und die Biegsamkeit von Papier aufweist, und die von ihrer Eintrittsseite (17a) bis zu ihrer Austrittsseite (17b) von einer Mehrzahl vom auf der Oberfläche der Schale verteilten Durchlöcherungen (70) durchzogen ist.

10. Vorrichtung nach Anspruch 1, dadurch gekennzeichnet, daß die katalytische Struktur (17) eine Schale (50) aus einem hitzebeständigen, durchlässigen Träger umfaßt, der mit einem Verbrennungskatalysator beschichtet ist, und daß diese Struktur parallel zu der Richtung des Strömungskanales für den Luftstrom (9) flach angeordnet ist.

**Claims**

1. Hot air-generating device, comprising:
– a body (1) which forms a conduit (9) for the circulation of an air flow, extending from an inlet (11) for fresh air to an outlet (12) for hot air
– a ventilation means (2) arranged inside the body for generating the flow of air from the inlet towards the outlet of the said conduit
– a catalytic gas burner (4), which is arranged entirely inside the conduit which is connected with a source (7) of the pressurized fuel gas and the combustion vapours of which are mixed with the air flow to produce the hot air which is discharged, the said induced-air burner comprising a means (30) for mixing primary air in with the fuel gas, arranged inside the circulation conduit, with a component (28) for drawing off primary air, a chamber (16) for distributing the fuel gas mixed with the air downstream of the mixing means, and a catalytic structure (17) the inlet face (17a) of which is in contact with the distribution chamber, and the outlet face of which (17b) is in contact with the conduit of the air flow, characterized in that the component for drawing off primary air is arranged so as to draw off the latter outside the conduit (9), independently and separately relative to the air flow circulating in the said conduit.

2. Device according to Claim 1, characterized in that the means (30) for mixing in primary air and the fuel gas is situated inside the conduit (9), and the said component comprises a cowl (28) for isolating relative to the said conduit, the internal volume of which for introducing primary air is connected directly with the outside of the said conduit, in particular via an extraction hole (31) provided in the latter.

3. Device according to Claim 1, characterized in that only the means ( 30 ) for mixing in primary air and the fuel gas is situated outside the conduit ( 9 ) and it may be arranged in a protective cowling permeable to ambient air.

4. Device according to Claim 1, characterized in that the catalytic structure (17) comprises a layer (50) of a refractory permeable support, which is impregnated with a combustion catalyst, and this structure is arranged and shaped essentially according to a tube the axis of which is identical or parallel to the direction of the conduit for the circulation of the air flow (9), the distribution chamber (16) being included inside the said tube.

5. Device according to Claim 4, characterized in that a flange (26) for deflecting the air flow is arranged in the conduit (9) upstream of the catalytic burner (4), transverse relative to the direction of the said conduit, the projection of the outer contour of the said burner (4), according to the said direction, onto the said flange being entirely inscribed within the contour of the latter.

6. Device according to Claim 3, characterized in that the catalytic burner has an internal tube (24), which is arranged essentially at a distance from the catalytic structure (17) and the axis of which is identical or parallel to the direction of the conduit (9) for the circulation of the air flow, the upstream and downstream faces of the burner being closed by a transverse plate (25, 26) which extends between the tubular catalytic structure (17) and the internal tube (24).

7. Device according to Claim 1, characterized in that the catalytic structure has at least two refractory cores (61, 62), which are separated from each other by an ignition gap (63), each core having a plurality of parallel channels (64) passing through it from its inlet face to its outlet face and the internal surface of which is coated with a combustion catalyst.

8. Device according to Claim 7, characterized in that the catalytic structure is arranged such that the fuel gas mixed with the primary air circulates successively through one core (61) and then the other (62), the inlet face of the first core forming the inlet face of the catalytic structure, and the outlet face of the second core forming the outlet face of the catalytic structure.

9. Device according to Claim 1, characterized in that the catalytic structure (17) has a layer (50) formed from a homogeneous tangle of ceramic fibers, having the cohesion and flexibility of a piece of paper, and have a plurality of perforations (70) distributed along the surface of the layer running through it from the inlet face (17a) to the outlet face (17b).

10. Device according to Claim 1, characterized in that the catalytic structure (17) comprises a layer (50) of a refractory permeable support, which is impregnated with a combustion catalyst, and this structure is arranged flat, parallel to the direction of the conduit for the circulation of the air flow (9).

FIG.1

EP 0 367 695 B1

FIG.2

FIG.3

FIG.5

FIG.4

11

FIG.6

FIG.7

EP 0 367 695 B1